# EUROPEAN PATENT APPLICATION

(11) **EP 4 549 245 A1**
(43) Date of publication of application: **07.05.2025**
(21) Application number: 24152057.6
(22) Date of filing: 16.01.2024
(51) Int. Cl.: B60P 1/64, B60P 3/34, B60P 3/42

(54) **VEHICLE WITH A BODY AND AN INTERNAL CONTAINER WITH ADJUSTABLE POSITION**

(30) Priority: 02.11.2023 IT 202300023097
(71) Applicant: Gitto, Antonino, 95031 Adrano (CT) (IT)
(72) Inventor: Gitto, Antonino, 95031 Adrano (CT) (IT)
(74) Representative: Papa, Elisabetta

(57) **Abstract**

A motor vehicle (100) provided with driving cab (101) and body (102), wherein inside the latter a container (110) is housed, longitudinally movable between a retracted position inside the body and a position protruding beyond the rear edge thereof. The container is moved, for example, by means of an electric motor (120) and a guide sliding system.

## Description

### Technical field of the invention

The present invention relates to the field of the motor vehicles provided with front driving cab and rear body for the transport of objects and people.

In particular, the invention can be applied to vans, trucks, articulated trucks and the like.

### Summary of the invention

The use of road transport vehicles, especially in Italy, is extremely widespread. In particular, such motor vehicles are available in many types, vans, trucks, articulated truck and others. However, each type of vehicle results to be specific, and suitable, for one single application, meant as specific capability of transporting objects or people.

Therefore, the inventor has noticed the need for an evolution of the known motor vehicles for better versatility.

The technical problem placed and solved by the present invention is then to provide a motor vehicle for the transport of objects and/or people allowing to meet the above-mentioned need.

Such problem is solved by a motor vehicle according to claim 1.

Preferred features of the present invention are set forth in the depending claims.

The present invention provides a motor vehicle wherein the transport space inside the body can be expanded or contracted in the longitudinal direction, that in the driving direction. In other words, the body can lengthen or shorten to adapt to the different transport needs.

To this purpose, inside the body of the motor vehicle a container with box-like, in particular substantially parallelepiped, structure is housed, movable longitudinally, that is back and forth, according to a telescopic arrangement. Such motion can be implemented by an electric motor - which in case can be driven by a control panel or by the driving cab - and preferably associated to a guide sliding system.

At the container wall farthest from the driving cab, that is in opposite position thereto, a pair of leaves, or doors, for accessing the internal compartment of the container is provided. Such doors can be configured to open inwards or outwards of the compartment, depending upon the specific application and needs.

The motor vehicle then is suitable for three distinct configurations or applications, as illustrated hereinafter.

In a first application, the container ends before the rear end of the body, then it is wholly housed in the same body, by leaving free a terminal portion thereof, and the doors open inwards. The system reveals to be important for whoever gets urgently into the motor vehicle, for example in case of armoured truck, by reaching safety. In particular, the doors of the container operate in the same way as emergency doors, present in the public places, which, by opening, ease exit and then safety of people.

In a second configuration, the container is aligned with the rear end of the body and the doors still open inwards. Such system is useful for law enforcement officials (for example Carabinieri and Police) who, when they leave the van-pickup truck, get down without having in front of them the leaves of the doors which, since they open outwards, would hide the side viewing on the right and on the left.

A third configuration provides that the container projects beyond the rear edge of the body, for example by a length equal to about 70 cm. This mode provides that the doors open preferably outwards, as it happens in the bodies of the known art vans. In this way, the load capacity of the van, relatively to the transported goods, is increased, if necessary. Such function is important, for example, on ambulances since in this way, in case of emergency, more wounded people to be transported to the hospitals can be collected.

Other advantages, features and use modes of the present invention will result evident from the following detailed description of some embodiments, shown by way of example and not for limitative purposes.

### Brief description of figures

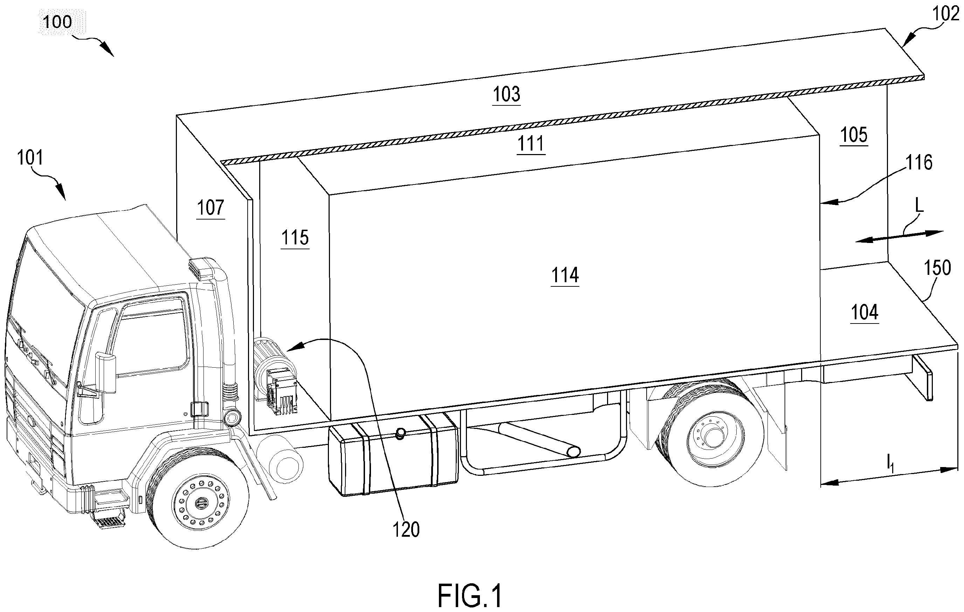

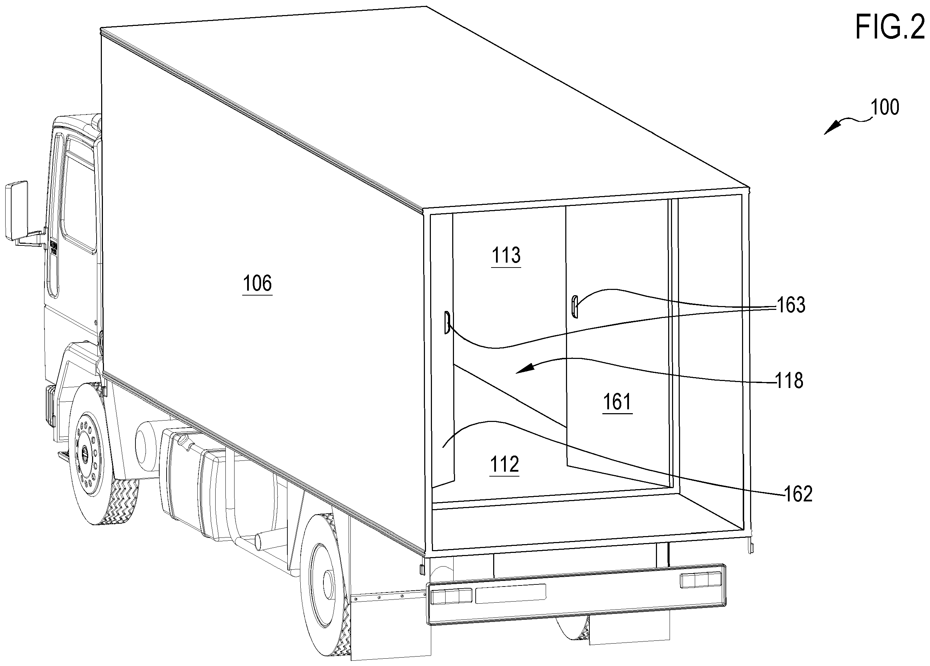

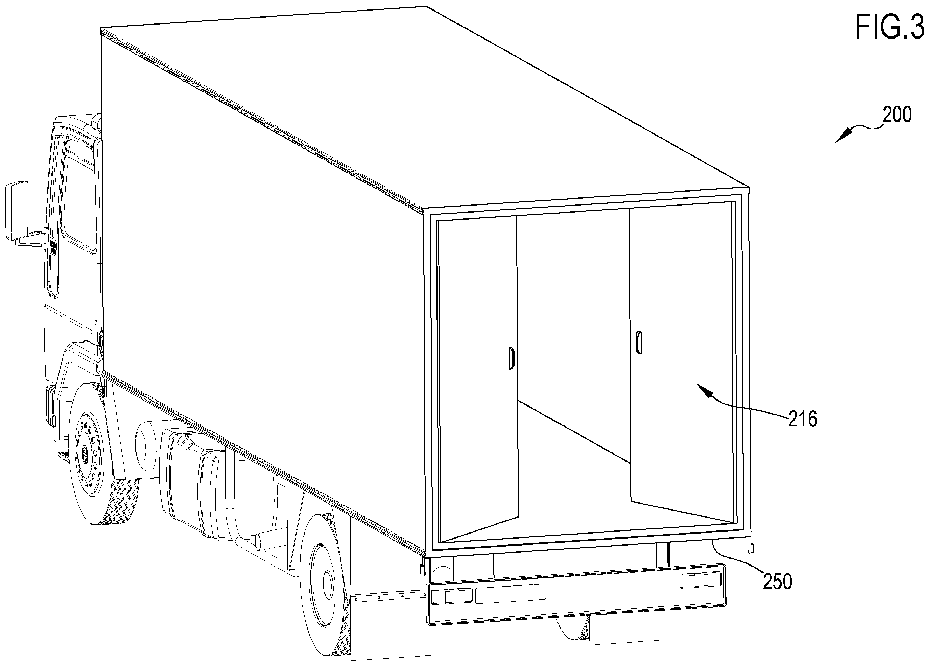

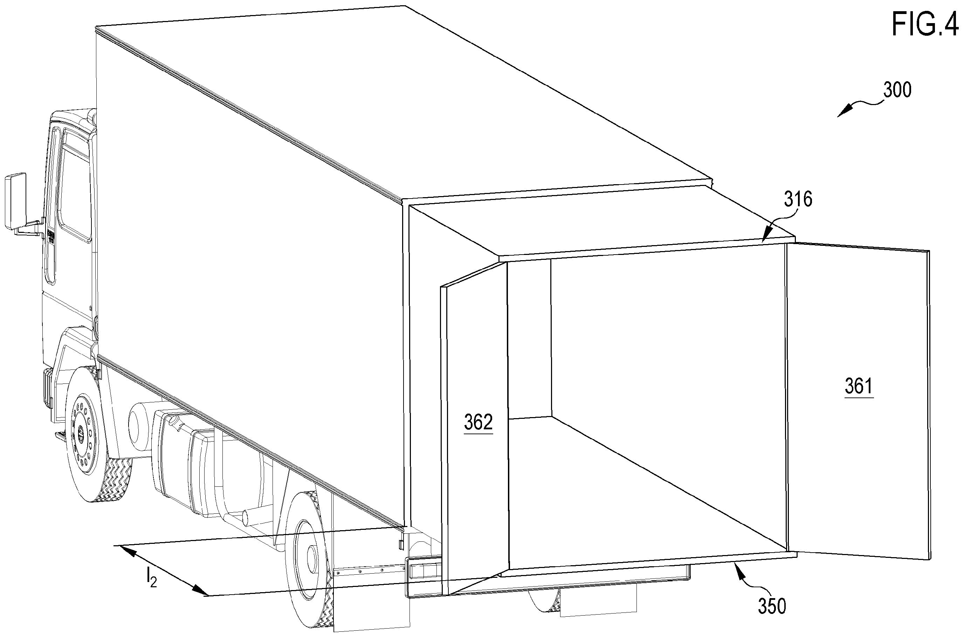

The figures of the enclosed drawings will be referred to, wherein:
▪ Figure 1 shows a front perspective, partially section, view, of a preferred embodiment of the motor vehicle according to the present invention;
▪ Figure 2 shows a rear perspective view of the motor vehicle of Figure 1;
▪ Figure 3 shows a rear perspective view of another preferred embodiment of the motor vehicle according to the present invention, in a different configuration with respect to Figure 1;
▪ Figure 4 shows a rear perspective view of an additional preferred embodiment of the motor vehicle according to the present invention, in a different configuration with respect to Figures 1 and 3.

The sizes of the above-mentioned figures are to be meant as purely exemplifying and not necessarily in proportion.

### Detailed description of preferred embodiments

Various embodiments and variants of the invention will be described hereinafter and this with reference to the above-mentioned figures.

In the following detailed description, embodiments and additional variants with respect to embodiments and variant already treated in the same description will be illustrated limited to the differences with what already illustrated.

Moreover, the different embodiments and variants described hereinafter are likely to be used in combination, where compatible.

By firstly referring to Figures 1 and 2, a motor vehicle according to a preferred embodiment of the invention is designated as a whole with 100.

The motor vehicle 100 has a front driving cab 101 and a rear body 102 for the transport of objects and/or people. The body 102 has a shape elongated in a longitudinal, or antero-posterior, shape L, where in the present example the attributes "anterior" and "posterior" relate to the usual driving direction.

In particular, the body 102 has substantially parallelepiped shape, with an upper wall 103, a lower wall 104 adjacent to the wheels of the motor vehicle 100, a first side wall 105, a second side wall 106 and a front wall 107 adjacent to the driving cab 101. In the present example, a rear wall is not provided, which however can be present in an embodiment variant.

The rear end 150 of the body 102 then can be identified as perimeter of the above-mentioned missing rear wall, defined by the walls 103, 104, 105 and 106. Inside the body 102 a container 110 having box-like structure is received telescopically, substantially parallelepiped too with walls corresponding, and parallel, to those of the body 102. In particular, the container 110 is defined by an upper wall 111, a lower wall 112, a first side wall 113, a second side wall 114, a front wall 115 and a rear wall 116. The container 110 defines an internal compartment 118 suitable to house objects and/or people.

As it can be seen in Figure 2, the rear wall 116 of the container 110 defines a pair of doors 161, 162 which can be opened inwards and are provided with grasping means 163.

The container 110 is movable inside the body 102 according to the antero-posterior direction L, preferably by driving means 120. Such means 120 can include, for example, an electric motor and a guide sliding system (the latter not shown).

In particular, in preferred embodiments the container 110 is movable between three configurations, as explained hereinafter.

In a first retracted configuration, thereto the Figures 1 and 2 relate, the rear wall 116 of the container 110 is longitudinally spaced apart from the rear end 150 of the body 102, for example according to a distance designated with *I₁* in Figure 1. This configuration, as mentioned above, is particularly suitable for armoured trucks or other applications in which there could be urgency to get into the vehicle 100 and take refuge in the container 110.

A second intermediate configuration is shown in Figure 3, wherein the motor vehicle is designated with 200. In this case, the rear end of the container, herein designated with 216, is substantially longitudinally aligned with that of the body, herein designated with 250. This configuration, as mentioned above, is particularly suitable for law enforcement officials, even thanks to the inward opening of the doors of the body.

A third protruding configuration is shown in Figure 4 with reference to a different embodiment, designated as a whole with 300, wherein the doors, herein designated with 361 and 362, open outwards. In this case the rear end 316 of the container extends posteriorly beyond that 350 of the body by a distance designated with *I*₂.

The present invention has been sofar described with reference to preferred embodiments. It is to be meant that other embodiments belonging to the same inventive core may exist, as defined by the protective scope of the herebelow reported claims.

## Claims

1. A motor vehicle (100), having a front driving cab (101) and a rear body (102) for the transport of objects and/or people, which motor vehicle is **characterized in that** it also includes:
- a container (110) with substantially parallelepiped box-like structure, telescopically received in said rear body (102) and movable with respect to it according to a longitudinal, antero-posterior, direction (L), of the motor vehicle, which container defines an internal compartment (118) suitable for housing objects and/or people, wherein a rear wall (116) of the container (110) defines a pair of doors (161, 162) that can be opened inwards or outwards; and
- driving means (120) configured to move said container (110) according to said antero-posterior direction,
which container (110) is movable between a first retracted configuration, wherein it is longitudinally spaced from a rear end (150) of the body (102), a second intermediate configuration, wherein a rear end thereof (116) is substantially longitudinally aligned with that (150) of the body (102) and a third protruding configuration, wherein its rear end (116) extends posteriorly beyond that (150) of the body (102).

2. The motor vehicle (100) according to claim 1, wherein said driving means (120) comprises an electric motor and a guide sliding system.

## Amended claims

### Amended claims in accordance with Rule 137(2) EPC.

1. A motor vehicle (100), having a front driving cab (101) and a rear body (102) for the transport of objects and/or people, which motor vehicle is **characterized by** the fact that it also includes:
o a container (110) with a substantially parallelepiped box-like structure, telescopically received in said rear body (102) and movable with respect to it according to a longitudinal, front-back, direction (L) of the motor vehicle, which container defines an internal compartment (118) suitable for housing objects and/or people, wherein a rear wall (116) of the container (110) defines a pair of doors (161, 162) that can be opened inwards or outwards; and
o driving means (120) configured to move said container (110) according to said antero-posterior direction,
which container (110) is movable between a first retracted configuration, wherein it is longitudinally spaced from a rear end (150) of the body (102), by leaving free a terminal portion thereof, and wherein the doors (161, 162) open inwards, a second intermediate configuration, wherein a rear end thereof (116) is substantially longitudinally aligned with that (150) of the body (102) and wherein the doors (161, 162) still open inwards, and a third protruding configuration, in which its rear end (116) extends posteriorly beyond that (150) of the body (102) and wherein the doors (161, 162) open outwards.

2. The motor vehicle (100) according to claim 1, wherein said driving means (120) comprises an electric motor and a guide sliding system.
